# EUROPEAN PATENT APPLICATION

(11) **EP 4 848 887 A1**
(43) Date of publication of application: **02.12.2026**
(21) Application number: 24919844.1
(22) Date of filing: 04.11.2024
(51) Int. Cl.: H04W 80/06

(54) **METHOD AND APPARATUS FOR TRANSMITTING SIGNAL**

(30) Priority: 23.01.2024 CN 202410095669
(71) Applicant: Datang Mobile Communications Equipment Co., Ltd., Beijing 100085 (CN)
(72) Inventor: SHI, Jie, Beijing 100085 (CN); FU, Jing, Beijing 100085 (CN); LIANG, Jing, Beijing 100085 (CN)
(74) Representative: Studio Torta S.p.A.
(86) International application number: PCT/CN2024/129599
(87) International publication number: WO 2025/156764

(57) **Abstract**

The present disclosure provides a signal transmission method and apparatus. The method according to embodiments of the present disclosure includes: acquiring wake-up signal configuration information, where the wake-up signal configuration information is configured to configure at least one of a wake-up signal for a specific cell, a wake-up signal for a specific frequency, a wake-up signal for a cell within a specific Radio Access Network-based Notification Area (RNA), a wake-up signal for a specific cell group, and a wake-up signal for a cell within a specific area scope; and sending a wake-up signal to a target cell according to the wake-up signal configuration information, where the wake-up signal is used to request the target cell to send a System Information Block 1 (SIB1) message.

## Description

The present disclosure claims the priority to the Chinese patent application filed with the Chinese Patent Office on January 23, 2024, with the application number of 202410095669.7 and the title of "SIGNAL TRANSMISSION METHOD AND APPARATUS", the entire content of which is incorporated herein by reference.

### TECHNICAL FIELD

The present disclosure relates to the field of communication technologies, and in particular, to a signal transmission method and apparatus.

### BACKGROUND

In the related art, a user equipment (UE) in a connected state may acquire a System Information Block 1 (SIB1) message of other cells by forwarding system messages of other cells through a cell in a Radio Resource Control (RRC) connected state with the UE. However, this is not applicable to UEs in an idle/inactive state, since such UEs have no RRC connection with the network, and thus the network cannot send system messages of neighbor cells to the terminal through RRC messages.

### SUMMARY

An objective of the present disclosure is to provide a signal transmission method and apparatus, so as to solve the problem that a terminal in an idle or inactive state cannot acquire system messages of neighbor cells.

To achieve the above objective, the present disclosure provides a signal transmission method, performed by a terminal, comprising:
acquiring wake-up signal configuration information, wherein the wake-up signal configuration information is configured to configure at least one of a wake-up signal for a specific cell, a wake-up signal for a specific frequency, a wake-up signal for a cell within a specific Radio Access Network-based Notification Area (RNA), a wake-up signal for a specific cell group, and a wake-up signal for a cell within a specific area scope; and
sending a wake-up signal to a target cell according to the wake-up signal configuration information, wherein the wake-up signal is used to request the target cell to send a System Information Block 1 (SIB1) message.

In some embodiments, the acquiring wake-up signal configuration information comprises:
acquiring the wake-up signal configuration information via at least one of pre-configuration information, a system message of a current camped cell, a Radio Resource Control (RRC) message of the current camped cell, a system message of a historically camped cell, and an RRC message of the historically camped cell;
wherein the RRC message is an RRC message acquired when the terminal is in a connected state.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
wherein the related parameter of the wake-up signal is pre-configured by a network-side device or agreed by a protocol.

In some embodiments, the related parameter of the wake-up signal comprises at least one of time-domain resources of the wake-up signal, frequency-domain resources of the wake-up signal, sequence information of the wake-up signal, and a transmission period of the wake-up signal.

In some embodiments, the sending a wake-up signal to a target cell according to the wake-up signal configuration information comprises:
sending the wake-up signal to the target cell according to the wake-up signal configuration information on condition that a preset condition is satisfied;
wherein the preset condition comprises at least one of the following:
   channel quality of the camped cell of the terminal is lower than and/or equal to a first threshold;
   signaling quality of the target cell measured by the terminal is higher than and/or equal to a second threshold;
   the target cell satisfies a cell selection or reselection condition of the terminal;
   the camped cell of the terminal enables the terminal to send the wake-up signal for the specific cell, the specific cell group, the cell within the specific RAN area, or the cell within the specific area scope;
   the terminal has uplink data to transmit or the terminal is ready to access the network;
   the terminal needs to update the SIB1 message of a wake-up cell;
   the terminal receives a system message update indication related to the wake-up cell.

In some embodiments, the wake-up signal comprises at least one of a Random Access (RA) scrambling code, a Sounding Reference Signal (SRS), an SRS positioning reference signal for positioning, and a Demodulation Reference Signal (DMRS).

In some embodiments, after sending the wake-up signal to the target cell, the method further comprises:
receiving the SIB1 message sent by the target cell.

In some embodiments, the SIB1 message satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

In some embodiments, after sending the wake-up signal to the target cell, the method further comprises:
acquiring a Synchronization Signal Block (SSB) sent by the target cell, wherein the SSB is sent by the target cell based on the wake-up signal.

In some embodiments, after sending the wake-up signal to the target cell, the method further comprises:
starting a first timer, wherein the first timer is configured to determine whether the target cell fails to be woken up.

In some embodiments, the method further comprises:
determining that the target cell fails to be woken up if the SIB1 and/or the SSB sent by the target cell are not detected within a running time of the first timer.

In some embodiments, the method further comprises:
selecting a wake-up cell other than the target cell from a plurality of wake-up cells to perform a wake-up procedure on condition that the target cell is determined to fail to be woken up.

In some embodiments, the method further comprises:
stopping the first timer if the SIB1 and/or the SSB sent by the target cell are detected within the running time of the first timer.

In some embodiments, the method further comprises:
not determining a wake-up failed cell as a wake-up cell and/or not sending the wake-up signal to the wake-up failed cell within a preset time period.

An embodiment of the present disclosure further provides a signal transmission method, performed by a first network-side device, comprising:
sending wake-up signal configuration information to a terminal, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

In some embodiments, the sending wake-up signal configuration information to a terminal comprises:
acquiring the wake-up signal configuration information via at least one of pre-configuration information, a system message of a current camped cell, an RRC message of the current camped cell, a system message of a historically camped cell, and an RRC message of the historically camped cell.

In some embodiments, before sending the wake-up signal configuration information to the terminal, the method further comprises:
acquiring the wake-up signal configuration information via at least one of an Xn interface, an F1 interface, and a core network interface;
   or,
configuring the wake-up signal configuration information to a neighbor cell via at least one of the Xn interface, the F1 interface, and the core network interface.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

In some embodiments, the related parameter of the wake-up signal comprises at least one of time-domain resources of the wake-up signal, frequency-domain resources of the wake-up signal, sequence information of the wake-up signal, and a transmission period of the wake-up signal.

In some embodiments, the wake-up signal comprises at least one of an RA scrambling code, an SRS, an SRS positioning reference signal for positioning, and a DMRS.

An embodiment of the present disclosure further provides a signal transmission method, performed by a second network-side device, comprising:
acquiring a wake-up signal; and
sending an SIB1 message to a terminal according to the wake-up signal.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

In some embodiments, the related parameter of the wake-up signal comprises at least one of time-domain resources of the wake-up signal, frequency-domain resources of the wake-up signal, sequence information of the wake-up signal, and a transmission period of the wake-up signal.

In some embodiments, the SIB1 message sent to the terminal satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

In some embodiments, after acquiring the wake-up signal, the method further comprises:
sending an SSB.

In some embodiments, before acquiring the wake-up signal, the method further comprises:
sending wake-up signal configuration information via at least one of an Xn interface, an F1 interface, and a core network interface;
   or,
receiving the wake-up signal configuration information configured by a neighbor cell or a core network via at least one of the Xn interface, the F1 interface, and the core network interface.

An embodiment of the present disclosure further provides a signal transmission apparatus, comprising a memory, a transceiver, and a processor; wherein,
the memory is configured to store a computer program; the transceiver is configured to transmit and receive data under control of the processor; the processor is configured to read the computer program from the memory and perform operations of:
acquiring wake-up signal configuration information, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and
sending a wake-up signal to a target cell according to the wake-up signal configuration information, wherein the wake-up signal is used to request the target cell to send an SIB1 message.

In some embodiments, the processor further performs steps of:
acquiring the wake-up signal configuration information via at least one of pre-configuration information, a system message of a current camped cell, an RRC message of the current camped cell, a system message of a historically camped cell, and an RRC message of the historically camped cell;
wherein the RRC message is an RRC message acquired when the terminal is in a connected state.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
wherein the related parameter of the wake-up signal is pre-configured by a network-side device or agreed by a protocol.

In some embodiments, the related parameter of the wake-up signal comprises at least one of time-domain resources of the wake-up signal, frequency-domain resources of the wake-up signal, sequence information of the wake-up signal, and a transmission period of the wake-up signal.

In some embodiments, the processor further performs steps of:
sending the wake-up signal to the target cell according to the wake-up signal configuration information on condition that a preset condition is satisfied;
wherein the preset condition comprises at least one of the following:
   channel quality of the camped cell of the terminal is lower than and/or equal to a first threshold;
   signaling quality of the target cell measured by the terminal is higher than and/or equal to a second threshold;
   the target cell satisfies a cell selection or reselection condition of the terminal;
   the camped cell of the terminal enables the terminal to send the wake-up signal for the specific cell, the specific cell group, the cell within the specific RAN area, or the cell within the specific area scope;
   the terminal has uplink data to transmit or the terminal is ready to access the network;
   the terminal needs to update the SIB1 message of a wake-up cell;
   the terminal receives a system message update indication related to the wake-up cell.

An embodiment of the present disclosure further provides a signal transmission apparatus, comprising a memory, a transceiver, and a processor; wherein,
the memory is configured to store a computer program; the transceiver is configured to transmit and receive data under control of the processor; the processor is configured to read the computer program from the memory and perform operations of:
sending wake-up signal configuration information to a terminal, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

In some embodiments, the processor further performs steps of:
acquiring the wake-up signal configuration information via at least one of pre-configuration information, a system message of a current camped cell, an RRC message of the current camped cell, a system message of a historically camped cell, and an RRC message of the historically camped cell.

An embodiment of the present disclosure further provides a signal transmission apparatus, comprising a memory, a transceiver, and a processor; wherein,
the memory is configured to store a computer program; the transceiver is configured to transmit and receive data under control of the processor; the processor is configured to read the computer program from the memory and perform operations of:
acquiring a wake-up signal; and
sending an SIB1 message to a terminal according to the wake-up signal.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

An embodiment of the present disclosure further provides a signal transmission apparatus, comprising:
a first acquisition unit, configured to acquire wake-up signal configuration information, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and
a first sending unit, configured to send a wake-up signal to a target cell according to the wake-up signal configuration information, wherein the wake-up signal is used to request the target cell to send an SIB1 message.

An embodiment of the present disclosure further provides a signal transmission apparatus, comprising:
a second sending unit, configured to send wake-up signal configuration information to a terminal, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

An embodiment of the present disclosure further provides a signal transmission apparatus, comprising:
a second acquisition unit, configured to acquire a wake-up signal; and
a third sending unit, configured to send an SIB1 message to a terminal according to the wake-up signal.

An embodiment of the present disclosure further provides a processor-readable storage medium, where the processor-readable storage medium stores a computer program, and the computer program is used to cause a processor to perform steps of the above signal transmission method.

The above technical solutions of the present disclosure have at least the following beneficial effects:
In the embodiments of the present disclosure, wake-up signal configuration information is acquired, where the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and a wake-up signal is sent to a target cell according to the wake-up signal configuration information, where the wake-up signal is used to request the target cell to send an SIB1 message. A wake-up signal can be configured for at least one cell through the above wake-up signal configuration information, and the wake-up signal is used to request the cell to send an SIB1, so that after the wake-up signal is sent to the target cell based on the wake-up signal configuration information, the target cell can be triggered to send the SIB1 to the terminal, thereby achieving the objective of enabling a terminal in an idle or inactive state to acquire the SIB1 of the target cell (which may be a neighbor cell).

### BRIEF DESCRIPTION OF THE DRAWINGS

FIG. 1 illustrates a structural diagram of a network system applicable to an embodiment of the present disclosure;
FIG. 2 illustrates a first schematic flowchart of a signal transmission method according to an embodiment of the present disclosure;
FIG. 3 illustrates a first schematic interaction diagram of a signal transmission method according to an embodiment of the present disclosure;
FIG. 4 illustrates a second schematic flowchart of a signal transmission method according to an embodiment of the present disclosure;
FIG. 5 illustrates a third schematic flowchart of a signal transmission method according to an embodiment of the present disclosure;
FIG. 6 illustrates a second schematic interaction diagram of a signal transmission method according to an embodiment of the present disclosure;
FIG. 7 illustrates a first structural block diagram of a signal transmission apparatus according to an embodiment of the present disclosure;
FIG. 8 illustrates a second structural block diagram of a signal transmission apparatus according to an embodiment of the present disclosure;
FIG. 9 illustrates a first schematic module diagram of a signal transmission apparatus according to an embodiment of the present disclosure;
FIG. 10 illustrates a second schematic module diagram of a signal transmission apparatus according to an embodiment of the present disclosure;
FIG. 11 illustrates a third schematic module diagram of a signal transmission apparatus according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are part of the embodiments of the present disclosure, not all of the embodiments. All other embodiments obtained by those of ordinary skill in the art based on the embodiments of the present disclosure without creative efforts shall fall within the protection scope of the present disclosure.

The terms "first", "second" and the like in the description and claims of the present disclosure are used to distinguish similar objects and are not necessarily used to describe a specific order or sequence. It should be understood that the terms used in this way are interchangeable under appropriate circumstances, so that the embodiments of the present disclosure can be implemented in sequences other than those illustrated or described herein. In addition, the terms "include" and "have" and any variations thereof are intended to cover non-exclusive inclusion, for example, a process, method, system, product or device that includes a series of steps or units is not necessarily limited to those steps or units that are clearly listed, but may include other steps or units that are not clearly listed or inherent to such process, method, product or device.

The term "and/or" in the embodiments of the present disclosure describes an association relationship of associated objects, indicating that three relationships may exist. For example, A and/or B may indicate three situations: A exists alone, A and B exist simultaneously, and B exists alone. The character "/" generally indicates that the associated objects are in an "or" relationship. The term "plurality" in the embodiments of the present disclosure means two or more, and other quantifiers are similar thereto.

In the embodiments of the present disclosure, words such as "exemplary" or "for example" are used to represent examples, illustrations or descriptions. Any embodiment or design solution described as "exemplary" or "for example" in the embodiments of the present disclosure should not be construed as being more preferred or advantageous than other embodiments or design solutions. Rather, the use of words such as "exemplary" or "for example" is intended to present relevant concepts in a concrete manner.

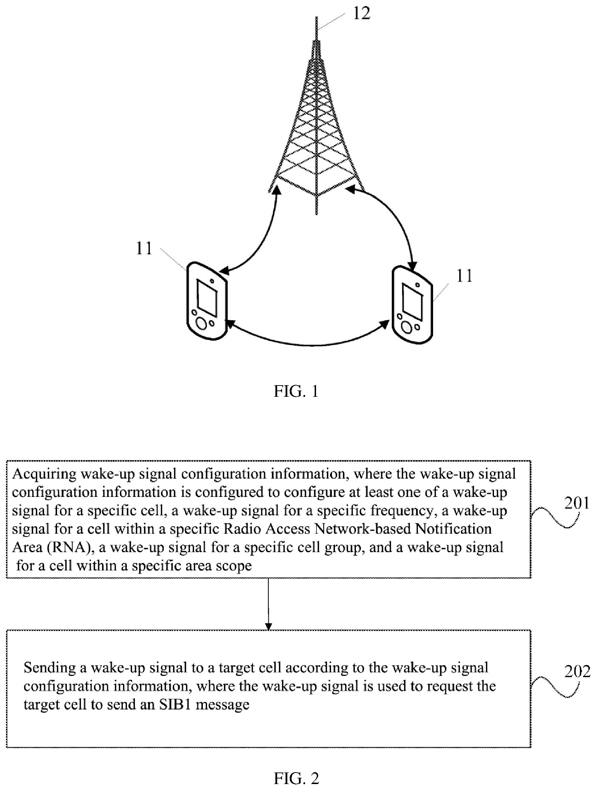

FIG. 1 shows a block diagram of a wireless communication system applicable to the embodiments of the present disclosure. The wireless communication system includes a terminal device 11 and a network-side device (or network device) 12. The terminal device 11 may also be referred to as a terminal or User Equipment (UE). It should be noted that the embodiments of the present disclosure do not limit a specific type of the terminal 11. The network-side device 12 may be a base station or a core network. It should be noted that only a base station in an NR system is taken as an example in the embodiments of the present disclosure, but a specific type of the base station is not limited.

To enable those skilled in the art to better understand the embodiments of the present disclosure, the following descriptions are given first.

### (1) Functions of SIB1;

An SIB1 message includes basic information that a UE can use to access a cell, such as a Public Land Mobile Network (PLMN), access control information, Random Access Channel (RACH) configuration information, and the like. The SIB1 message is repeatedly sent according to a certain period.

### (2) Basic concepts of an R19 on-demand SIB1 scenario;

In the related art, a network always sends an SIB1 message according to an agreed period, and the SIB1 message includes basic information that enables a UE to access the cell, such as a PLMN and RA configuration information. To save energy on the network side, a base station may turn off transmission of the SIB1 message, which also causes the UE to be unable to camp on the cell, affecting cell coverage and network capacity.

When a UE is in an idle/inactive state, if a cell is in an energy-saving state and does not send an SIB1 message, but the UE detects the cell based on SSB information of the cell and intends to access the cell, the cell needs to start transmission of the SIB1 message based on a certain trigger mechanism, so that the UE camps on the corresponding cell.

The signal transmission method provided by the embodiments of the present disclosure is described in detail below with reference to the accompanying drawings through some embodiments and application scenarios thereof.

As shown in FIG. 2, an embodiment of the present disclosure provides a signal transmission method, performed by a terminal, the method including:
Step 201: Acquiring wake-up signal configuration information, where the wake-up signal configuration information is configured to configure at least one of a wake-up signal for a specific cell, a wake-up signal for a specific frequency, a wake-up signal for a cell within a specific Radio Access Network-based Notification Area (RNA), a wake-up signal for a specific cell group, and a wake-up signal for a cell within a specific area scope.

In the embodiments of the present disclosure, the wake-up signal configuration information can configure a wake-up signal for a specific cell, a specific frequency, a specific RNA, a specific cell group and/or a specific area scope, that is, a wake-up signal can be configured for at least one cell through the above wake-up signal configuration information.

Step 202: Sending a wake-up signal to a target cell according to the wake-up signal configuration information, where the wake-up signal is used to request the target cell to send a System Information Block 1 (SIB1) message.

The target cell includes at least one of the above specific cell, a cell corresponding to the specific frequency, a cell within the specific RAN, a cell in the above specific cell, and/or a cell within the specific area scope.

After receiving the above wake-up signal, the target cell may send an SIB1 message to the terminal based on the wake-up signal.

In the embodiments of the present disclosure, wake-up signal configuration information is acquired, where the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and a wake-up signal is sent to a target cell according to the wake-up signal configuration information, where the wake-up signal is used to request the target cell to send an SIB1 message. A wake-up signal can be configured for at least one cell through the above wake-up signal configuration information, and the wake-up signal is used to request the cell to send an SIB1, so that after the wake-up signal is sent to the target cell based on the wake-up signal configuration information, the target cell can be triggered to send the SIB1 to the terminal, thereby achieving the objective of enabling a terminal in an idle or inactive state to acquire the SIB1 of the target cell (which may be a neighbor cell).

As an implementation manner, the acquiring wake-up signal configuration information includes:
acquiring the wake-up signal configuration information via at least one of pre-configuration information, a system message of a current camped cell, a Radio Resource Control (RRC) message of the current camped cell, a system message of a historically camped cell, and an RRC message of the historically camped cell;
where the RRC message is an RRC message acquired when the terminal is in a connected state.

In some embodiments, the above RRC message includes at least one of an RRC reconfiguration message and an RRC Release message.

Exemplarily, a network-side device may configure a wake-up signal for a specific cell, a wake-up signal for all cells within a specific RAN, or a wake-up signal for a specific cell group through pre-configuration information;
or, the network-side device may broadcast a wake-up signal for a specific cell, a specific cell group, or all cells within a specific RNA or a specific area scope through a system message;
or, when the terminal is in an RRC connected state, the network-side device may configure a wake-up signal for a specific cell, a specific cell group or all cells within a specific RNA through an RRC message.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
where the related parameter of the wake-up signal is pre-configured by a network-side device or agreed by a protocol.

In some embodiments, the wake-up signal or a related parameter of the wake-up signal is further configured to indicate at least one of the following:
a transmission period of an SSB message;
the number of repetitions of the SSB message within one transmission period;
the number of repetitions of the transmission period of the SSB message;
transmission or stopping transmission of the SSB message.

In the embodiments of the present disclosure, transmission of the SIB1 and/or SSB and transmission parameters (such as transmission resources, transmission period, etc.) of the SIB1 and/or SSB can be indicated through the wake-up signal or the related parameter of the wake-up signal.

As an implementation manner, the related parameter of the wake-up signal includes at least one of time-domain resources of the wake-up signal, frequency-domain resources of the wake-up signal, sequence information of the wake-up signal, and a transmission period of the wake-up signal.

For example, when the time-domain resource of the wake-up signal is resource 1, it is used to indicate that the transmission period of the SIB1 message is period 1; when the time-domain resource of the wake-up signal is resource 2, it is used to indicate that the transmission period of the SIB1 message is period 2. For another example, when the sequence information of the wake-up signal is sequence 1, it is used to indicate transmission of the SIB message; when the sequence information of the wake-up signal is sequence 2, it is used to indicate stopping transmission of the SIB message.

In some embodiments, the sending a wake-up signal to a target cell according to the wake-up signal configuration information includes:
sending the wake-up signal to the target cell according to the wake-up signal configuration information on condition that a preset condition is satisfied;
where the preset condition includes at least one of the following:
   channel quality of the camped cell of the terminal is lower than and/or equal to a first threshold;
   signaling quality of the target cell measured by the terminal is higher than and/or equal to a second threshold;
   the target cell satisfies a cell selection or reselection condition of the terminal;
   the camped cell of the terminal enables the terminal to send the wake-up signal for the specific cell, the specific cell group, the cell within the specific RAN area, or the cell within the specific area scope;
   the terminal has uplink data to transmit or the terminal is ready to access the network;
   the terminal needs to update the SIB1 message of a wake-up cell;
   the terminal receives a system message update indication related to the wake-up cell.

In the embodiments of the present disclosure, when the above preset condition is satisfied, it may indicate that the terminal needs to camp on or access the above target cell, so that the target cell is caused to send an SIB1 by sending a wake-up signal to the target cell based on the wake-up signal configuration information, thereby facilitating the terminal to access or camp on the cell.

In some embodiments, the wake-up signal includes at least one of a Random Access (RA) scrambling code, a Sounding Reference Signal (SRS), an SRS positioning reference signal for positioning, and a Demodulation Reference Signal (DMRS).

In the embodiments of the present disclosure, time-domain resources, frequency-domain resources, transmission period and the like of at least one of RA, SRS and DMRS can be used to explicitly or implicitly indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
transmission or stopping transmission of the SSB message;
a transmission period of the SSB message;
the number of repetitions of the SSB message within one transmission period;
the number of repetitions of the transmission period of the SSB message.

In some embodiments, after the sending a wake-up signal to a target cell, the method further includes:
receiving the SIB1 message sent by the target cell.

Here, by receiving the SIB1 message sent by the target cell, the terminal can camp on or access the target cell.

In some embodiments, the SIB1 message satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value; for example, if the number of repetitions of the SIB1 message within a transmission period indicated by the wake-up signal or the related parameter of the wake-up signal is 3, the number of repetitions of the SIB1 message within one transmission period may be 4 or 5;
the number of repetitions of the transmission period of the SIB1 message is higher than or equal to the number of repetitions of the transmission period of the SIB1 message indicated by the wake-up signal or the related parameter of the wake-up signal, or a predefined value; for example, if the number of repetitions of the transmission period of the SIB1 message indicated by the wake-up signal or the related parameter of the wake-up signal is 2, the number of repetitions of the transmission period of the SIB1 message may be specifically 3, that is, the SIB1 message is sent within 3 transmission periods;
the number of transmissions of the SIB1 message is higher than or equal to the number of transmissions of the SIB1 message indicated by the wake-up signal or the related parameter of the wake-up signal, or a predefined value.

In the embodiments of the present disclosure, after acquiring the wake-up signal, the network-side device sends the SIB1 message based on the wake-up signal or transmission parameters (such as a transmission period, the number of repetitions within one transmission period, the number of repetitions of the transmission period of the SIB1 message, etc.) of the SIB1 message indicated by the wake-up signal, so as to ensure that the transmission parameters of the sent SIB1 message can satisfy the transmission parameters indicated by the terminal.

In some embodiments, after the sending a wake-up signal to a target cell, the method further includes:
acquiring a Synchronization Signal Block (SSB) sent by the target cell, where the SSB is sent by the target cell based on the wake-up signal.

In the embodiments of the present disclosure, after receiving the wake-up signal, if the target cell does not send an SSB yet, transmission of the SSB may be triggered.

In some embodiments, if the target cell is an SSB-less cell, the SSB and the SIB1 are sent after receiving the wake-up signal.

In some embodiments, after the sending a wake-up signal to a target cell, the method further includes:
starting a first timer, where the first timer is configured to determine whether the target cell fails to be woken up.

Here, based on the above first timer, it is convenient for the terminal to determine whether wake-up of the target wake-up cell fails, so as to adopt a corresponding processing operation subsequently.

In some embodiments, the method of the embodiments of the present disclosure further includes:
determining that the target cell fails to be woken up if the SIB1 and/or the SSB sent by the target cell are not detected within a running time of the first timer.

In the embodiments of the present disclosure, after receiving the wake-up signal, the target wake-up cell needs to send the SIB1 and/or SSB based on the wake-up signal. If the terminal does not receive the SIB1 and/or SSB within a certain period of time, it is determined that the target cell fails to be woken up. Starting the timer can control a duration for the terminal to wait for the wake-up cell to send the SIB1 and/or SSB.

In some embodiments, the method of the embodiments of the present disclosure further includes:
selecting a wake-up cell other than the target cell from a plurality of wake-up cells to perform a wake-up procedure on condition that the target cell is determined to fail to be woken up.

Here, when the wake-up of the target wake-up cell fails, the target wake-up cell may fail to be woken up successfully within a certain period of time, for example, channel quality of the target wake-up cell is relatively low within a certain period of time. Therefore, by selecting a wake-up cell other than the target wake-up cell to perform the wake-up procedure, access failure or camping failure caused by an inappropriate wake-up procedure can be effectively avoided, and a subsequent access success rate is improved and power consumption of the terminal is reduced.

In some embodiments, the method further includes:
stopping the first timer if the SIB1 and/or the SSB sent by the target cell are detected within the running time of the first timer.

Here, if the SIB1 and/or SSB sent by the target wake-up cell are/is detected within the running time of the first timer, it is determined that the wake-up of the target wake-up cell succeeds, and the first timer is stopped.

In some embodiments, the method further includes:
not determining a wake-up failed cell as a wake-up cell and/or not sending the wake-up signal to the wake-up failed cell within a preset time period.

Here, the wake-up failed cell may fail to be woken up successfully within a certain period of time, for example, channel quality of the wake-up failed cell is relatively low within a certain period of time. Therefore, by not determining a wake-up failed cell as a wake-up cell and/or not sending the wake-up signal to the wake-up failed cell within a preset time period, access failure or camping failure caused by an inappropriate wake-up procedure can be effectively avoided, and a subsequent access success rate is improved and power consumption of the terminal is reduced.

The signal transmission method of the present disclosure is described below with reference to embodiments.

Embodiment 1: A UE acquires configuration information of a wake-up signal, and sends a wake-up signal when wake-up is needed. After acquiring the wake-up signal, a network side sends an SIB1 message in a corresponding cell according to indication information of the wake-up signal.

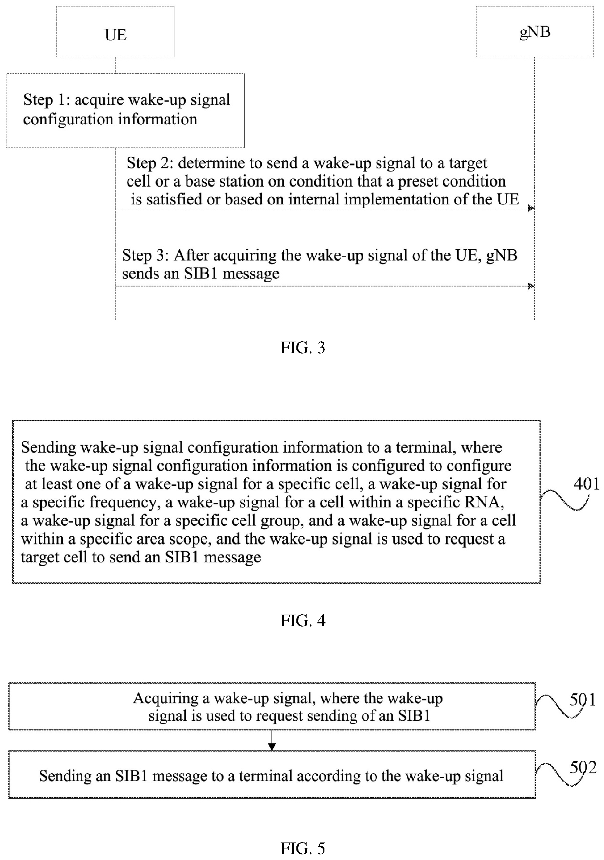

As shown in FIG. 3, the method includes:
Step 1: An idle/inactive UE acquires wake-up signal configuration information.

Specifically, the wake-up signal configuration information is acquired through pre-configuration information, a system message of a camped cell or an RRC message when previously in a connected state, and the wake-up signal configuration information specifically includes at least one of the following contents:
a wake-up signal for a specific cell, a wake-up signal for all cells within a specific RNA, or a wake-up signal for a specific cell group configured by a pre-configuration message;
a wake-up signal for a specific cell broadcast by a system message;
a wake-up signal for all cells within a specific RNA broadcast by a system message;
a wake-up signal for all cells within a specific area scope broadcast by a system message;
a wake-up signal for a specific cell group broadcast by a system message;
a wake-up signal for a specific cell configured by an RRC message when the UE is in a connected state or an RRC release message;
a wake-up signal for all cells within a specific RNA configured by an RRC message when the UE is in a connected state or an RRC release message;
a wake-up signal for a specific cell group configured by an RRC message when the UE is in a connected state or an RRC release message.

Further, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

Step 2: it is determined to send a wake-up signal to a target cell or a base station on condition that a preset condition is satisfied or based on internal implementation of the UE;
where the preset condition includes at least one of the following:
channel quality of the camped cell of the terminal is lower than and/or equal to a first threshold;
signaling quality of the target cell measured by the terminal is higher than and/or equal to a second threshold;
the target cell satisfies a cell selection or reselection condition of the terminal;
the camped cell of the terminal enables the terminal to send the wake-up signal for the specific cell, the specific cell group, the cell within the specific RAN area, or the cell within the specific area scope;
the terminal has uplink data to transmit or the terminal is ready to access the network;
the terminal needs to update the SIB1 message of a wake-up cell;
the terminal receives a system message update indication related to the wake-up cell.

Step 3: After acquiring the wake-up signal of the UE, a gNB sends an SIB1 message.

Further, the SIB1 message is sent when at least one of the following conditions is satisfied:
the gNB senses (receives) the wake-up signal sent by the UE;
the gNB senses that the wake-up signal sent by the UE is for a local cell, a local RNA, or a local cell group;
the wake-up signal of the UE received by the gNB is higher than a threshold.

Further, the gNB sends the SIB1 message according to the acquired information of the wake-up signal, specifically as follows:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

Step 4: The UE reads the SIB1 message, and selects to camp on or access the cell according to the SIB1 message.

In the above embodiment, after acquiring the wake-up message of the SIB1, if the gNB still does not send an SSB message, transmission of the SSB message may be triggered.

The wake-up signal in the above embodiment may be one or a combination of an RA scrambling code, an SRS and a DMRS signal.

Time-frequency resources or a transmission period of at least one of the RA scrambling code, the SRS and the DMRS may be used to explicitly or implicitly represent indication information of the UE for the SIB1 message. The indication information is used to indicate that the gNB sends the SIB1 message, sends the SIB1 message and the SSB message, sends a signal combination message of a certain type, and/or resources, periods and the like for sending these messages.

In the embodiments of the present disclosure, a UE in an idle/inactive state can wake up surrounding cells to send an SIB1 message, so that the UE camps on or accesses the cell, preventing the UE from entering a connected state before acquiring relevant information, and reducing delay for the UE to access the cell.

As shown in FIG. 4, an embodiment of the present disclosure further provides a signal transmission method, performed by a first network-side device, where the first network-side device may be specifically a base station, the method including:
Step 401: Sending wake-up signal configuration information to a terminal, where the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

In the embodiments of the present disclosure, by sending the above wake-up signal configuration information to the terminal, the terminal can acquire, based on the wake-up signal configuration information, at least one of a wake-up signal for a specific cell, a wake-up signal for a specific frequency, a wake-up signal for a cell within a specific RNA, a wake-up signal for a specific cell group, and a wake-up signal for a cell within a specific area scope, where the wake-up signal is used to request the cell to send an SIB1, so that after the terminal sends the wake-up signal to the target cell based on the wake-up signal configuration information, the target cell can be triggered to send the SIB1 to the terminal, thereby achieving the objective of enabling a terminal in an idle or inactive state to acquire the SIB1 of the target cell (which may be a neighbor cell).

In some embodiments, the sending wake-up signal configuration information to a terminal includes:
acquiring the wake-up signal configuration information via at least one of pre-configuration information, a system message of a current camped cell, an RRC message of the current camped cell, a system message of a historically camped cell, and an RRC message of the historically camped cell.

In some embodiments, the above RRC message includes at least one of an RRC reconfiguration message and an RRC Release message.

Exemplarily, a network-side device may configure a wake-up signal for a specific cell, a wake-up signal for all cells within a specific RAN, or a wake-up signal for a specific cell group through pre-configuration information;
or, the network-side device may broadcast a wake-up signal for a specific cell, a specific cell group, or all cells within a specific RNA or a specific area scope through a system message;
or, when the terminal is in an RRC connected state, the network-side device may configure a wake-up signal for a specific cell, a specific cell group or all cells within a specific RNA through an RRC message.

In some embodiments, before the sending wake-up signal configuration information to a terminal, the method further includes:
acquiring the wake-up signal configuration information via at least one of an Xn interface, an F1 interface, and a core network interface;
   or,
configuring the wake-up signal configuration information to a neighbor cell via at least one of the Xn interface, the F1 interface, and the core network interface.

In a case that the above wake-up signal configuration information is configured by the first network-side device itself, the wake-up signal configuration information is configured to a neighbor cell (a second network-side device) through at least one of the Xn interface, the F1 interface and the core network interface.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

In some embodiments, the related parameter of the wake-up signal includes at least one of time-domain resources of the wake-up signal, frequency-domain resources of the wake-up signal, sequence information of the wake-up signal, and a transmission period of the wake-up signal.

In some embodiments, the wake-up signal includes at least one of an RA scrambling code, an SRS, an SRS positioning reference signal for positioning, and a DMRS.

In the embodiments of the present disclosure, by sending the above wake-up signal configuration information to the terminal, the terminal can acquire, based on the wake-up signal configuration information, at least one of a wake-up signal for a specific cell, a wake-up signal for a specific frequency, a wake-up signal for a cell within a specific RNA, a wake-up signal for a specific cell group, and a wake-up signal for a cell within a specific area scope, where the wake-up signal is used to request the cell to send an SIB1, so that after the terminal sends the wake-up signal to the target cell based on the wake-up signal configuration information, the target cell can be triggered to send the SIB1 to the terminal, thereby achieving the objective of enabling a terminal in an idle or inactive state to acquire the SIB1 of the target cell (which may be a neighbor cell).

As shown in FIG. 5, an embodiment of the present disclosure further provides a signal transmission method, performed by a second network-side device, where the second network-side device is specifically a base station, and the second network-side device is a neighbor base station of the first network-side device, the method including:
Step 501: Acquiring a wake-up signal, where the wake-up signal is used to request sending of an SIB1.
Step 502: Sending an SIB1 message to a terminal according to the wake-up signal.

Specifically, the SIB1 message is sent to the terminal when at least one of the following conditions is satisfied:
the second network-side device determines that the wake-up signal is a wake-up signal for a local cell, a local RNA, or a local cell group;
signal quality of the wake-up signal is higher than a preset threshold.

In the embodiments of the present disclosure, a wake-up signal is acquired; and an SIB1 message is sent to a terminal according to the wake-up signal, so that a terminal in an idle or inactive state can acquire the SIB1 of the second network-side device.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

In some embodiments, the related parameter of the wake-up signal includes at least one of time-domain resources of the wake-up signal, frequency-domain resources of the wake-up signal, sequence information of the wake-up signal, and a transmission period of the wake-up signal.

In some embodiments, the SIB1 message sent to the terminal satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

In some embodiments, after the acquiring a wake-up signal, the method further includes:
sending an SSB.

Exemplarily, after receiving the wake-up signal, if the target cell does not send an SSB yet, transmission of the SSB may be triggered.

In some embodiments, before the acquiring a wake-up signal, the method further includes:
sending wake-up signal configuration information via at least one of an Xn interface, an F1 interface, and a core network interface;
   or,
receiving the wake-up signal configuration information configured by a neighbor cell or a core network via at least one of the Xn interface, the F1 interface, and the core network interface.

In a case that the above wake-up signal configuration information is configured by the second network-side device itself, the wake-up signal configuration information is sent to a neighbor cell through at least one of the Xn interface, the F1 interface and the core network interface.

A process of interaction of wake-up signal configuration information between base stations is described below with reference to Embodiment 2.

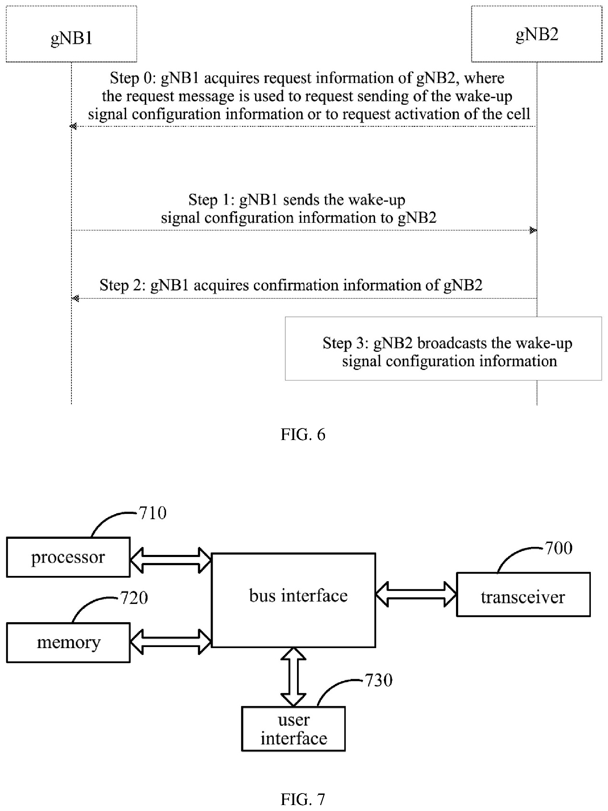

Embodiment 2: As shown in FIG. 6, the method includes:
Step 0: Before sending wake-up signal configuration information to a gNB2, a gNB1 acquires request information of the gNB2, where the request message is used to request sending of the wake-up signal configuration information or to request activation of the cell.

This step may be omitted.

Step 1: The gNB1 sends the wake-up signal configuration information to the gNB2.

Further, the wake-up signal configuration information may further include activation indication information of an SSB of the cell.

The wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope.

Step 2: The gNB1 acquires confirmation information of the gNB2.

Step 3: The gNB2 broadcasts the wake-up signal configuration information.

Further, the gNB2 may further broadcast activation information of an SSB of a neighbor cell.

In some embodiments, the wake-up signal includes at least one of a Random Access (RA) scrambling code, a Sounding Reference Signal (SRS), an SRS positioning reference signal for positioning, and a Demodulation Reference Signal (DMRS).

In the embodiments of the present disclosure, time-domain resources, frequency-domain resources, transmission period and the like of at least one of RA, SRS and DMRS can be used to explicitly or implicitly indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
transmission or stopping transmission of the SSB message;
a transmission period of the SSB message;
the number of repetitions of the SSB message within one transmission period;
the number of repetitions of the transmission period of the SSB message.

In addition, in a case that the first network-side device is a Centralized Unit (CU) and the second network-side device is a Distributed Unit (DU), or the first network-side device is a DU and the second network-side device is a CU, the process of interaction of wake-up signal configuration information between base stations may include:
the CU sends the wake-up signal configuration information to the DU, and the DU feeds back a confirmation message; or the CU sends a request message for requesting the wake-up signal configuration information to the DU, and the CU acquires the wake-up signal configuration information from the DU.

The DU acquires the wake-up signal of the UE, sends the SIB1 message over an air interface, and notifies the CU that the DU is woken up and/or relevant information of the UE that wakes up the DU.

Through the above solution, the objective of interaction of wake-up signal configuration information between base stations is achieved, so that after the terminal sends the wake-up signal to the target cell based on the wake-up signal configuration information, the target cell can be triggered to send the SIB1 to the terminal, thereby achieving the objective of enabling a terminal in an idle or inactive state to acquire the SIB1 of the target cell (which may be a neighbor cell).

As shown in FIG. 7, an embodiment of the present disclosure provides a signal transmission apparatus, applied to a terminal, including a memory 720, a transceiver 700, and a processor 710:
the memory 720 is configured to store a computer program; the transceiver 700 is configured to transmit and receive data under control of the processor 710; the processor 710 is configured to read the computer program stored in the memory 720 and perform the following operations:
acquiring wake-up signal configuration information, where the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and
sending a wake-up signal to a target cell according to the wake-up signal configuration information, where the wake-up signal is used to request the target cell to send an SIB1 message.

Herein, in FIG. 7, a bus architecture may include any number of interconnected buses and bridges, and specifically links various circuits of one or more processors represented by the processor 710 and a memory represented by the memory 720 together. The bus architecture may also link various other circuits such as peripheral devices, voltage regulators and power management circuits, which are well known in the art, and therefore, no further description is given herein. A bus interface provides an interface. The transceiver 700 may be a plurality of elements, that is, include a transmitter and a receiver, and provide units for communicating with various other apparatuses over a transmission medium, where the transmission medium includes a wireless channel, a wired channel, an optical cable and other transmission media. For different user equipments, a user interface 730 may also be an interface capable of being externally connected or internally connected to required devices, where the connected devices include, but are not limited to, a keypad, a display, a speaker, a microphone, a joystick and the like.

The processor 710 is responsible for managing the bus architecture and general processing, and the memory 720 may store data used by the processor 710 when performing operations.

In some embodiments, the processor 710 may be a Central Processing Unit (CPU), an Application Specific Integrated Circuit (ASIC), a Field-Programmable Gate Array (FPGA) or a Complex Programmable Logic Device (CPLD), and the processor may also adopt a multi-core architecture.

The processor is used to execute any method provided by the embodiments of the present disclosure according to an acquired executable instruction by calling the computer program stored in the memory. The processor and the memory may also be physically arranged separately.

In some embodiments, the processor further implements the following steps:
acquiring the wake-up signal configuration information via at least one of pre-configuration information, a system message of a current camped cell, an RRC message of the current camped cell, a system message of a historically camped cell, and an RRC message of the historically camped cell;
where the RRC message is an RRC message acquired when the terminal is in a connected state.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
where the related parameter of the wake-up signal is pre-configured by a network-side device or agreed by a protocol.

In some embodiments, the related parameter of the wake-up signal includes at least one of time-domain resources of the wake-up signal, frequency-domain resources of the wake-up signal, sequence information of the wake-up signal, and a transmission period of the wake-up signal.

In some embodiments, the processor further implements the following steps:
sending the wake-up signal to the target cell according to the wake-up signal configuration information on condition that a preset condition is satisfied;
where the preset condition includes at least one of the following:
   channel quality of the camped cell of the terminal is lower than and/or equal to a first threshold;
   signaling quality of the target cell measured by the terminal is higher than and/or equal to a second threshold;
   the target cell satisfies a cell selection or reselection condition of the terminal;
   the camped cell of the terminal enables the terminal to send the wake-up signal for the specific cell, the specific cell group, the cell within the specific RAN area, or the cell within the specific area scope;
   the terminal has uplink data to transmit or the terminal is ready to access the network;
   the terminal needs to update the SIB1 message of a wake-up cell;
   the terminal receives a system message update indication related to the wake-up cell.

In some embodiments, the wake-up signal includes at least one of an RA scrambling code, an SRS, an SRS positioning reference signal for positioning, and a DMRS.

In some embodiments, the processor further implements the following steps:
receiving the SIB1 message sent by the target cell.

In some embodiments, the SIB1 message satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

In some embodiments, the processor further implements the following steps:
acquiring an SSB sent by the target cell, where the SSB is sent by the target cell based on the wake-up signal.

In some embodiments, the processor further implements the following steps:
starting a first timer, where the first timer is configured to determine whether the target cell fails to be woken up.

In some embodiments, the processor further implements the following steps:
determining that the target cell fails to be woken up if the SIB1 or the SSB sent by the target cell is not detected within a running time of the first timer.

In some embodiments, the processor further implements the following steps:
selecting a wake-up cell other than the target cell from a plurality of wake-up cells to perform a wake-up procedure on condition that the target cell is determined to fail to be woken up.

In some embodiments, the processor further implements the following steps:
stopping the first timer if the SIB1 and/or the SSB sent by the target cell are detected within the running time of the first timer.

In some embodiments, the processor further implements the following steps:
not determining a wake-up failed cell as a wake-up cell and/or not sending the wake-up signal to the wake-up failed cell within a preset time period.

It should be noted herein that the above apparatus provided by the embodiments of the present disclosure can implement all method steps implemented by the above method embodiment applied to a terminal, and can achieve the same technical effects, and the same parts and beneficial effects as those of the method embodiment in this embodiment are not described in detail herein.

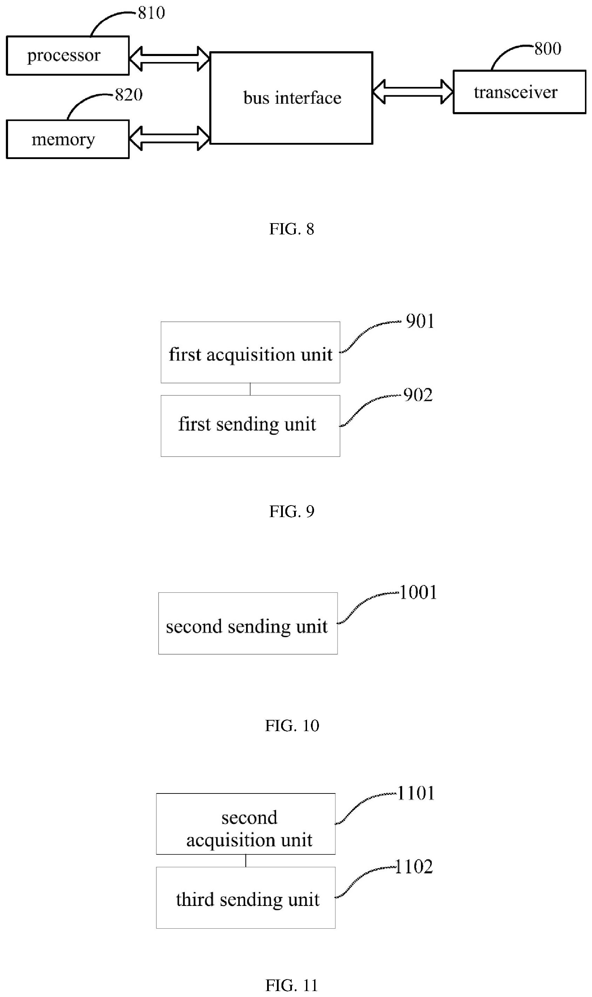

As shown in FIG. 8, an embodiment of the present disclosure further provides a signal transmission apparatus, including a memory 820, a transceiver 800, and a processor 810:
the memory 820 is configured to store a computer program; the transceiver 800 is configured to transmit and receive data under control of the processor; the processor 810 is configured to read the computer program stored in the memory and perform the following operations:
sending wake-up signal configuration information to a terminal, where the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message;
or, acquiring a wake-up signal; and sending an SIB1 message to a terminal according to the wake-up signal.

Herein, in FIG. 8, a bus architecture may include any number of interconnected buses and bridges, and specifically links various circuits of one or more processors represented by the processor 810 and a memory represented by the memory 820 together. The bus architecture may also link various other circuits such as peripheral devices, voltage regulators and power management circuits, which are well known in the art, and therefore, no further description is given herein. A bus interface provides an interface. The transceiver 800 may be a plurality of elements, that is, include a transmitter and a receiver, and provide units for communicating with various other apparatuses over a transmission medium, where the transmission medium includes a wireless channel, a wired channel, an optical cable and other transmission media. The processor 810 is responsible for managing the bus architecture and general processing, and the memory 820 may store data used by the processor 810 when performing operations.

The processor 810 may be a Central Processing Unit (CPU), an Application Specific Integrated Circuit (ASIC), a Field-Programmable Gate Array (FPGA) or a Complex Programmable Logic Device (CPLD), and the processor may also adopt a multi-core architecture.

It should be noted herein that the above apparatus provided by the embodiments of the present disclosure can implement all method steps implemented by the above method embodiment applied to a first network-side device or a second network-side device, and can achieve the same technical effects, and the same parts and beneficial effects as those of the method embodiment in this embodiment are not described in detail herein.

As shown in FIG. 9, an embodiment of the present disclosure further provides a signal transmission apparatus, including:
a first acquisition unit 901, configured to acquire wake-up signal configuration information, where the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and
a first sending unit 902, configured to send a wake-up signal to a target cell according to the wake-up signal configuration information, where the wake-up signal is used to request the target cell to send an SIB1 message.

In some embodiments, the first acquisition unit is configured to acquire the wake-up signal configuration information via at least one of pre-configuration information, a system message of a current camped cell, an RRC message of the current camped cell, a system message of a historically camped cell, and an RRC message of the historically camped cell;
where the RRC message is an RRC message acquired when the terminal is in a connected state.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
where the related parameter of the wake-up signal is pre-configured by a network-side device or agreed by a protocol.

In some embodiments, the related parameter of the wake-up signal includes at least one of time-domain resources of the wake-up signal, frequency-domain resources of the wake-up signal, sequence information of the wake-up signal, and a transmission period of the wake-up signal.

In some embodiments, the first sending unit is configured to send the wake-up signal to the target cell according to the wake-up signal configuration information on condition that a preset condition is satisfied;
where the preset condition includes at least one of the following:
channel quality of the camped cell of the terminal is lower than and/or equal to a first threshold;
signaling quality of the target cell measured by the terminal is higher than and/or equal to a second threshold;
the target cell satisfies a cell selection or reselection condition of the terminal;
the camped cell of the terminal enables the terminal to send the wake-up signal for the specific cell, the specific cell group, the cell within the specific RAN area, or the cell within the specific area scope;
the terminal has uplink data to transmit or the terminal is ready to access the network;
the terminal needs to update the SIB1 message of a wake-up cell;
the terminal receives a system message update indication related to the wake-up cell.

In some embodiments, the wake-up signal includes at least one of an RA scrambling code, an SRS, an SRS positioning reference signal for positioning, and a DMRS.

In some embodiments, the apparatus of the embodiments of the present disclosure further includes:
a first receiving unit, configured to receive the SIB1 message sent by the target cell after the first sending unit sends the wake-up signal to the target cell.

In some embodiments, the SIB1 message satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

In some embodiments, the apparatus of the embodiments of the present disclosure further includes:
a third acquisition unit, configured to acquire an SSB sent by the target cell after the first sending unit sends the wake-up signal to the target cell, where the SSB is sent by the target cell based on the wake-up signal.

In some embodiments, the apparatus of the embodiments of the present disclosure further includes:
a starting unit, configured to start a first timer after the first sending unit sends the wake-up signal to the target cell, where the first timer is configured to determine whether the target cell fails to be woken up.

In some embodiments, the apparatus of the embodiments of the present disclosure further includes:
a first determination unit, configured to determine that the target cell fails to be woken up if the SIB1 and/or the SSB sent by the target cell are not detected within a running time of the first timer.

In some embodiments, the apparatus of the embodiments of the present disclosure further includes:
a selection unit, configured to select a wake-up cell other than the target cell from a plurality of wake-up cells to perform a wake-up procedure on condition that the target cell is determined to fail to be woken up.

In some embodiments, the apparatus of the embodiments of the present disclosure further includes:
a stopping unit, configured to stop the first timer if the SIB1 and/or the SSB sent by the target cell are detected within the running time of the first timer.

In some embodiments, the apparatus of the embodiments of the present disclosure further includes:
a processing unit, configured to not determine a wake-up failed cell as a wake-up cell and/or not send the wake-up signal to the wake-up failed cell within a preset time period.

It should be noted herein that the above apparatus provided by the embodiments of the present disclosure can implement all method steps implemented by the above method embodiment applied to a terminal, and can achieve the same technical effects, and the same parts and beneficial effects as those of the method embodiment in this embodiment are not described in detail herein.

As shown in FIG. 10, an embodiment of the present disclosure further provides a signal transmission apparatus, including:
a second sending unit 1001, configured to send wake-up signal configuration information to a terminal, where the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

In some embodiments, the second sending unit is configured to acquire the wake-up signal configuration information via at least one of pre-configuration information, a system message of a current camped cell, an RRC message of the current camped cell, a system message of a historically camped cell, and an RRC message of the historically camped cell.

In some embodiments, the apparatus further includes:
a fourth acquisition unit, configured to acquire the wake-up signal configuration information via at least one of an Xn interface, an F1 interface, and a core network interface before the second sending unit sends the wake-up signal configuration information to the terminal;
   or,
a configuration unit, configured to configure the wake-up signal configuration information to a neighbor cell via at least one of the Xn interface, the F1 interface, and the core network interface before the second sending unit sends the wake-up signal configuration information to the terminal.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

In some embodiments, the related parameter of the wake-up signal includes at least one of time-domain resources of the wake-up signal, frequency-domain resources of the wake-up signal, sequence information of the wake-up signal, and a transmission period of the wake-up signal.

In some embodiments, the wake-up signal includes at least one of a Random Access (RA) scrambling code, a Sounding Reference Signal (SRS), an SRS positioning reference signal for positioning, and a Demodulation Reference Signal (DMRS).

It should be noted herein that the above apparatus provided by the embodiments of the present disclosure can implement all method steps implemented by the above method embodiment applied to a first network-side device, and can achieve the same technical effects, and the same parts and beneficial effects as those of the method embodiment in this embodiment are not described in detail herein.

As shown in FIG. 11, an embodiment of the present disclosure further provides a signal transmission apparatus, including:
a second acquisition unit 1101, configured to acquire a wake-up signal; and
a third sending unit 1102, configured to send an SIB1 message to a terminal according to the wake-up signal.

In some embodiments, the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

In some embodiments, the related parameter of the wake-up signal includes at least one of time-domain resources of the wake-up signal, frequency-domain resources of the wake-up signal, sequence information of the wake-up signal, and a transmission period of the wake-up signal.

In some embodiments, the SIB1 message sent to the terminal satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

In some embodiments, the apparatus further includes:
a fourth sending unit, configured to send an SSB after the second acquisition unit acquires the wake-up signal.

In some embodiments, the apparatus further includes:
a fifth sending unit, configured to send wake-up signal configuration information via at least one of an Xn interface, an F1 interface, and a core network interface before the second acquisition unit acquires the wake-up signal;
   or,
a second receiving unit, configured to receive the wake-up signal configuration information configured by a neighbor cell or a core network via at least one of the Xn interface, the F1 interface, and the core network interface before the second acquisition unit acquires the wake-up signal.

It should be noted herein that the above apparatus provided by the embodiments of the present disclosure can implement all method steps implemented by the above method embodiment applied to a second network-side device, and can achieve the same technical effects, and the same parts and beneficial effects as those of the method embodiment in this embodiment are not described in detail herein.

It should be noted that the division of the units in the embodiments of the present disclosure is illustrative, and is only a logical function division, and another division manner may be adopted during actual implementation. In addition, each functional unit in each embodiment of the present disclosure may be integrated into one processing unit, each unit may exist alone physically, or two or more units may be integrated into one unit. The above integrated unit may be implemented in the form of hardware or in the form of a software functional unit.

When the integrated unit is implemented in the form of a software functional unit and sold or used as an independent product, it may be stored in a processor-readable storage medium. Based on such understanding, the technical solutions of the present disclosure, essentially or the part contributing to the related art, or all or part of the technical solutions may be embodied in the form of a computer software product, where the computer software product is stored in a storage medium and includes several instructions to enable a computer device (which may be a personal computer, a server, or a network device, etc.) or a processor to perform all or part of the steps of the method described in each embodiment of the present disclosure. The foregoing storage medium includes: various media that can store program codes, such as a USB flash drive, a removable hard disk, a Read-Only Memory (ROM), a Random Access Memory (RAM), a magnetic disk, or an optical disk.

In some embodiments of the present disclosure, a processor-readable storage medium is further provided. The processor-readable storage medium stores program instructions, and the program instructions are configured to cause the processor to perform all steps implemented by the above method embodiments performed by the terminal, or to perform all steps implemented by the method embodiments performed by the first network-side device or the second network-side device, and achieve the same technical effects. The same parts and beneficial effects as those in the method embodiments in the present embodiment are not elaborated herein.

A terminal device involved in the embodiments of the present disclosure may be a device that provides a user with voice and/or data connectivity, a handheld device with a wireless connection function, or another processing device connected to a wireless modem. In different systems, the terminal device may also have different names. For example, in a 5G system, the terminal device may be referred to as User Equipment (UE). A wireless terminal device may communicate with one or more core networks (CNs) via a Radio Access Network (RAN), and the wireless terminal device may be a mobile terminal device such as a mobile phone (or referred to as a "cellular" phone) and a computer with the mobile terminal device, for example, may be a portable, pocket, handheld, computer-built-in or vehicle-mounted mobile device that exchanges voice and/or data with the radio access network. For example, a Personal Communication Service (PCS) phone, a cordless phone, a Session Initiation Protocol (SIP) phone, a Wireless Local Loop (WLL) station, a Personal Digital Assistant (PDA) and other devices. The wireless terminal device may also be referred to as a system, a subscriber unit, a subscriber station, a mobile station, a mobile, a remote station, an access point, a remote terminal, an access terminal, a user terminal, a user agent, a user device, which is not limited in the embodiments of the present disclosure.

A network device (or network-side device) involved in the embodiments of the present disclosure may be a base station, and the base station may include a plurality of cells that provide services for terminals. Depending on a specific application scenario, the base station may also be referred to as an access point, or may be a device that communicates with a wireless terminal device over an air interface through one or more sectors, or another name. The network device may be configured to interconvert received air frames and Internet Protocol (IP) packets, and serve as a router between the wireless terminal device and the rest of the access network, where the rest of the access network may include an IP communication network. The network device may also coordinate attribute management for the air interface. For example, the network device involved in the embodiments of the present disclosure may be a network device (Base Transceiver Station, BTS) in a Global System for Mobile communications (GSM) or Code Division Multiple Access (CDMA), a network device (NodeB) in a Wide-band Code Division Multiple Access (WCDMA), an evolved network device (evolutional Node B, eNB or e-NodeB) in a Long Term Evolution (LTE) system, a 5G base station (gNB) in a 5G network architecture (next generation system), a Home evolved Node B (HeNB), a relay node, a femto base station, a pico base station, etc., which is not limited in the embodiments of the present disclosure. In some network structures, the network device may include a Centralized Unit (CU) node and a Distributed Unit (DU) node, and the centralized unit and the distributed unit may also be arranged geographically separately.

Multi Input Multi Output (MIMO) transmission may be performed between the network device and the terminal device using one or more antennas respectively, and the MIMO transmission may be Single User MIMO (SU-MIMO) or Multiple User MIMO (MU-MIMO). Depending on the form and quantity of antenna combinations, the MIMO transmission may be 2D-MIMO, 3D-MIMO, FD-MIMO, or massive-MIMO, or may be diversity transmission, precoding transmission, or beamforming transmission, etc.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk storage and optical storage, etc.) having computer-usable program codes embodied therein.

The present disclosure is described with reference to flowcharts and/or block diagrams of the method, device (system), and computer program product according to the embodiments of the present disclosure. It should be understood that each flow and/or block in the flowcharts and/or block diagrams, and combinations of flows and/or blocks in the flowcharts and/or block diagrams may be implemented by computer-executable instructions. These computer-executable instructions may be provided to a processor of a general-purpose computer, a special-purpose computer, an embedded processor, or another programmable data processing device to generate a machine, so that the instructions executed by the processor of the computer or another programmable data processing device generate an apparatus for implementing the functions specified in one or more flows in the flowcharts and/or one or more blocks in the block diagrams.

These processor-executable instructions may also be stored in a processor-readable memory that can guide a computer or another programmable data processing device to operate in a specific manner, so that the instructions stored in the processor-readable memory generate a manufactured article including an instruction apparatus that implements the functions specified in one or more flows in the flowcharts and/or one or more blocks in the block diagrams.

These processor-executable instructions may also be loaded onto a computer or another programmable data processing device, so that a series of operation steps are performed on the computer or another programmable device to generate computer-implemented processing, so that the instructions executed on the computer or another programmable device provide steps for implementing the functions specified in one or more flows in the flowcharts and/or one or more blocks in the block diagrams.

In addition, it should be pointed out that in the apparatus and method of the present disclosure, obviously, each component or each step may be decomposed and/or recombined. Such decomposition and/or recombination should be regarded as equivalent solutions of the present disclosure. Moreover, the steps of performing the above series of processes may be naturally performed in chronological order according to the description, but do not necessarily need to be performed in chronological order. Some steps may be performed in parallel or independently of each other. Those of ordinary skill in the art can understand that all or any steps or components of the method and apparatus of the present disclosure can be implemented in hardware, firmware, software or a combination thereof in any computing device (including a processor, a storage medium, etc.) or a network of computing devices, which can be implemented by those of ordinary skill in the art using their basic programming skills after reading the description of the present disclosure.

It should be noted that the division of the above modules is merely a logical function division, and during actual implementation, all or part of the modules may be integrated into one physical entity or may be physically separated. Moreover, these modules may all be implemented in the form of software invoked by a processing element, or all may be implemented in the form of hardware, or part of the modules may be implemented in the form of software invoked by a processing element and part of the modules may be implemented in the form of hardware. For example, a module may be a separately provided processing element, or may be integrated into a chip of the above apparatus for implementation, or may be stored in the memory of the above apparatus in the form of program codes, and the above functions of the module may be invoked and executed by a processing element of the above apparatus. The implementation of other modules is similar. In addition, all or part of these modules may be integrated together or may be implemented independently. The processing element described herein may be an integrated circuit with a signal processing capability. In the implementation process, each step of the above method or each of the above modules may be implemented by an integrated logic circuit of hardware in the processing element or an instruction in the form of software.

For example, each module, unit, sub-unit or sub-module may be one or more integrated circuits configured to implement the above method, for example: one or more Application Specific Integrated Circuits (ASICs), or one or more Digital Signal Processors (DSPs), or one or more Field Programmable Gate Arrays (FPGAs), etc. For another example, when one of the above modules is implemented in the form of a program code invoked by a processing element, the processing element may be a general-purpose processor, such as a Central Processing Unit (CPU) or another processor that can invoke the program codes. For another example, these modules may be integrated together and implemented in the form of a System-On-a-Chip (SOC).

The terms "first", "second" and the like in the description and claims of the present disclosure are used to distinguish similar objects and are not necessarily used to describe a specific order or sequence. It should be understood that the terms used in this way are interchangeable under appropriate circumstances, so that the embodiments of the present disclosure described herein can be implemented in sequences other than those illustrated or described herein. In addition, the terms "include" and "have" and any variations thereof are intended to cover non-exclusive inclusion, for example, a process, method, system, product or device that includes a series of steps or units is not necessarily limited to those steps or units that are clearly listed, but may include other steps or units that are not clearly listed or inherent to such process, method, product or device. In addition, the term "and/or" used in the description and claims indicates at least one of the connected objects, for example, A and/or B and/or C indicates seven situations including A alone, B alone, C alone, A and B together, B and C together, A and C together, and A, B and C together. Similarly, the expression "at least one of A and B" used in the description and claims should be understood as "A alone, B alone, or A and B together".

Obviously, those skilled in the art can make various changes and modifications to the present disclosure without departing from the spirit and scope of the present disclosure. Thus, if these changes and modifications of the present disclosure fall within the scope of the claims of the present disclosure and equivalents thereof, the present disclosure is also intended to include these changes and modifications.

## Claims

1. A signal transmission method, performed by a terminal, comprising:
acquiring wake-up signal configuration information, wherein the wake-up signal configuration information is configured to configure at least one of a wake-up signal for a specific cell, a wake-up signal for a specific frequency, a wake-up signal for a cell within a specific Radio Access Network-based Notification Area (RNA), a wake-up signal for a specific cell group, and a wake-up signal for a cell within a specific area scope; and
sending a wake-up signal to a target cell according to the wake-up signal configuration information, wherein the wake-up signal is used to request the target cell to send a System Information Block 1 (SIB1) message.

2. The method according to claim 1, wherein the acquiring wake-up signal configuration information comprises:
acquiring the wake-up signal configuration information via at least one of pre-configuration information, a system message of a current camped cell, a Radio Resource Control (RRC) message of the current camped cell, a system message of a historically camped cell, and an RRC message of the historically camped cell;
wherein the RRC message is an RRC message acquired when the terminal is in a connected state.

3. The method according to claim 1, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
wherein the related parameter of the wake-up signal is pre-configured by a network-side device or agreed by a protocol.

4. The method according to claim 3, wherein the related parameter of the wake-up signal comprises at least one of time-domain resources of the wake-up signal, frequency-domain resources of the wake-up signal, sequence information of the wake-up signal, and a transmission period of the wake-up signal.

5. The method according to claim 1, wherein the sending a wake-up signal to a target cell according to the wake-up signal configuration information comprises:
sending the wake-up signal to the target cell according to the wake-up signal configuration information on condition that a preset condition is satisfied;
wherein the preset condition comprises at least one of the following:
channel quality of the camped cell of the terminal is lower than and/or equal to a first threshold;
signaling quality of the target cell measured by the terminal is higher than and/or equal to a second threshold;
the target cell satisfies a cell selection or reselection condition of the terminal;
the camped cell of the terminal enables the terminal to send the wake-up signal for the specific cell, the specific cell group, the cell within the specific RAN area, or the cell within the specific area scope;
the terminal has uplink data to transmit or the terminal is ready to access the network;
the terminal needs to update the SIB1 message of a wake-up cell;
the terminal receives a system message update indication related to the wake-up cell.

6. The method according to claim 1, wherein the wake-up signal comprises at least one of a Random Access (RA) scrambling code, a Sounding Reference Signal (SRS), an SRS positioning reference signal for positioning, and a Demodulation Reference Signal (DMRS).

7. The method according to claim 1, wherein after sending the wake-up signal to the target cell, the method further comprises:
receiving the SIB1 message sent by the target cell.

8. The method according to claim 7, wherein the SIB1 message satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

9. The method according to claim 1, wherein after sending the wake-up signal to the target cell, the method further comprises:
acquiring a Synchronization Signal Block (SSB) sent by the target cell, wherein the SSB is sent by the target cell based on the wake-up signal.

10. The method according to claim 1, wherein after sending the wake-up signal to the target cell, the method further comprises:
starting a first timer, wherein the first timer is configured to determine whether the target cell fails to be woken up.

11. The method according to claim 10, further comprising:
determining that the target cell fails to be woken up if the SIB1 and/or the SSB sent by the target cell are not detected within a running time of the first timer.

12. The method according to claim 10 or 11, further comprising:
selecting a wake-up cell other than the target cell from a plurality of wake-up cells to perform a wake-up procedure on condition that the target cell is determined to fail to be woken up.

13. The method according to claim 10, further comprising:
stopping the first timer if the SIB1 and/or the SSB sent by the target cell are detected within the running time of the first timer.

14. The method according to claim 10, further comprising:
not determining a wake-up failed cell as a wake-up cell and/or not sending the wake-up signal to the wake-up failed cell within a preset time period.

15. A signal transmission method, performed by a first network-side device, comprising:
sending wake-up signal configuration information to a terminal, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

16. The method according to claim 15, wherein the sending wake-up signal configuration information to a terminal comprises:
acquiring the wake-up signal configuration information via at least one of pre-configuration information, a system message of a current camped cell, an RRC message of the current camped cell, a system message of a historically camped cell, and an RRC message of the historically camped cell.

17. The method according to claim 15, wherein before sending the wake-up signal configuration information to the terminal, the method further comprises:
acquiring the wake-up signal configuration information via at least one of an Xn interface, an F1 interface, and a core network interface;
or,
configuring the wake-up signal configuration information to a neighbor cell via at least one of the Xn interface, the F1 interface, and the core network interface.

18. The method according to claim 15, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

19. The method according to claim 18, wherein the related parameter of the wake-up signal comprises at least one of time-domain resources of the wake-up signal, frequency-domain resources of the wake-up signal, sequence information of the wake-up signal, and a transmission period of the wake-up signal.

20. The method according to claim 15, wherein the wake-up signal comprises at least one of an RA scrambling code, an SRS, an SRS positioning reference signal for positioning, and a DMRS.

21. A signal transmission method, performed by a second network-side device, comprising:
acquiring a wake-up signal; and
sending an SIB1 message to a terminal according to the wake-up signal.

22. The method according to claim 21, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

23. The method according to claim 22, wherein the related parameter of the wake-up signal comprises at least one of time-domain resources of the wake-up signal, frequency-domain resources of the wake-up signal, sequence information of the wake-up signal, and a transmission period of the wake-up signal.

24. The method according to claim 22, wherein the SIB1 message sent to the terminal satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

25. The method according to claim 21, wherein after acquiring the wake-up signal, the method further comprises:
sending an SSB.

26. The method according to claim 21, wherein before acquiring the wake-up signal, the method further comprises:
sending wake-up signal configuration information via at least one of an Xn interface, an F1 interface, and a core network interface;
or,
receiving the wake-up signal configuration information configured by a neighbor cell or a core network via at least one of the Xn interface, the F1 interface, and the core network interface.

27. A signal transmission apparatus, comprising a memory, a transceiver, and a processor; wherein,
the memory is configured to store a computer program; the transceiver is configured to transmit and receive data under control of the processor; the processor is configured to read the computer program from the memory and perform operations of:
acquiring wake-up signal configuration information, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and
sending a wake-up signal to a target cell according to the wake-up signal configuration information, wherein the wake-up signal is used to request the target cell to send an SIB1 message.

28. The apparatus according to claim 27, wherein the processor further performs steps of:
acquiring the wake-up signal configuration information via at least one of pre-configuration information, a system message of a current camped cell, an RRC message of the current camped cell, a system message of a historically camped cell, and an RRC message of the historically camped cell;
wherein the RRC message is an RRC message acquired when the terminal is in a connected state.

29. The apparatus according to claim 27, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
wherein the related parameter of the wake-up signal is pre-configured by a network-side device or agreed by a protocol.

30. The apparatus according to claim 29, wherein the related parameter of the wake-up signal comprises at least one of time-domain resources of the wake-up signal, frequency-domain resources of the wake-up signal, sequence information of the wake-up signal, and a transmission period of the wake-up signal.

31. The apparatus according to claim 27, wherein the processor further performs steps of:
sending the wake-up signal to the target cell according to the wake-up signal configuration information on condition that a preset condition is satisfied;
wherein the preset condition comprises at least one of the following:
channel quality of the camped cell of the terminal is lower than and/or equal to a first threshold;
signaling quality of the target cell measured by the terminal is higher than and/or equal to a second threshold;
the target cell satisfies a cell selection or reselection condition of the terminal;
the camped cell of the terminal enables the terminal to send the wake-up signal for the specific cell, the specific cell group, the cell within the specific RAN area, or the cell within the specific area scope;
the terminal has uplink data to transmit or the terminal is ready to access the network;
the terminal needs to update the SIB1 message of a wake-up cell;
the terminal receives a system message update indication related to the wake-up cell.

32. The apparatus according to claim 27, wherein the wake-up signal comprises at least one of an RA scrambling code, an SRS, an SRS positioning reference signal for positioning, and a DMRS.

33. The apparatus according to claim 27, wherein the processor further performs steps of:
receiving the SIB1 message sent by the target cell.

34. The apparatus according to claim 33, wherein the SIB1 message satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

35. The apparatus according to claim 27, wherein the processor further performs steps of:
acquiring an SSB sent by the target cell, wherein the SSB is sent by the target cell based on the wake-up signal.

36. The apparatus according to claim 27, wherein the processor further performs steps of:
starting a first timer, wherein the first timer is configured to determine whether the target cell fails to be woken up.

37. The apparatus according to claim 36, wherein the processor further performs steps of:
determining that the target cell fails to be woken up if the SIB1 and/or the SSB sent by the target cell are not detected within a running time of the first timer.

38. The apparatus according to claim 36 or 37, wherein the processor further performs steps of:
selecting a wake-up cell other than the target cell from a plurality of wake-up cells to perform a wake-up procedure on condition that the target cell is determined to fail to be woken up.

39. The apparatus according to claim 36, wherein the processor further performs steps of:
stopping the first timer if the SIB1 and/or the SSB sent by the target cell are detected within the running time of the first timer.

40. The apparatus according to claim 36, wherein the processor further performs steps of:
not determining a wake-up failed cell as a wake-up cell and/or not sending the wake-up signal to the wake-up failed cell within a preset time period.

41. A signal transmission apparatus, comprising a memory, a transceiver, and a processor; wherein,
the memory is configured to store a computer program; the transceiver is configured to transmit and receive data under control of the processor; the processor is configured to read the computer program from the memory and perform operations of:
sending wake-up signal configuration information to a terminal, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

42. The apparatus according to claim 41, wherein the processor further performs steps of:
acquiring the wake-up signal configuration information via at least one of pre-configuration information, a system message of a current camped cell, an RRC message of the current camped cell, a system message of a historically camped cell, and an RRC message of the historically camped cell.

43. The apparatus according to claim 41, wherein the processor further performs steps of:
acquiring the wake-up signal configuration information via at least one of an Xn interface, an F1 interface, and a core network interface before a second sending unit sends the wake-up signal configuration information to the terminal;
or,
configuring the wake-up signal configuration information to a neighbor cell via at least one of the Xn interface, the F1 interface, and the core network interface before the second sending unit sends the wake-up signal configuration information to the terminal.

44. The apparatus according to claim 41, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

45. The apparatus according to claim 44, wherein the related parameter of the wake-up signal comprises at least one of time-domain resources of the wake-up signal, frequency-domain resources of the wake-up signal, sequence information of the wake-up signal, and a transmission period of the wake-up signal.

46. The apparatus according to claim 41, wherein the wake-up signal comprises at least one of an RA scrambling code, an SRS, an SRS positioning reference signal for positioning, and a DMRS.

47. A signal transmission apparatus, comprising a memory, a transceiver, and a processor; wherein,
the memory is configured to store a computer program; the transceiver is configured to transmit and receive data under control of the processor; the processor is configured to read the computer program from the memory and perform operations of:
acquiring a wake-up signal; and
sending an SIB1 message to a terminal according to the wake-up signal.

48. The apparatus according to claim 47, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

49. The apparatus according to claim 48, wherein the related parameter of the wake-up signal comprises at least one of time-domain resources of the wake-up signal, frequency-domain resources of the wake-up signal, sequence information of the wake-up signal, and a transmission period of the wake-up signal.

50. The apparatus according to claim 48, wherein the SIB1 message sent to the terminal satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

51. The apparatus according to claim 47, wherein the processor further performs steps of:
sending an SSB.

52. The apparatus according to claim 47, wherein the processor further performs steps of:
sending wake-up signal configuration information via at least one of an Xn interface, an F1 interface, and a core network interface;
or,
receiving the wake-up signal configuration information configured by a neighbor cell or a core network via at least one of the Xn interface, the F1 interface, and the core network interface.

53. A signal transmission apparatus, comprising:
a first acquisition unit, configured to acquire wake-up signal configuration information, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope; and
a first sending unit, configured to send a wake-up signal to a target cell according to the wake-up signal configuration information, wherein the wake-up signal is used to request the target cell to send an SIB1 message.

54. The apparatus according to claim 53, wherein the first acquisition unit is configured to acquire the wake-up signal configuration information via at least one of pre-configuration information, a system message of a current camped cell, an RRC message of the current camped cell, a system message of a historically camped cell, and an RRC message of the historically camped cell;
wherein the RRC message is an RRC message acquired when the terminal is in a connected state.

55. The apparatus according to claim 53, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message;
wherein the related parameter of the wake-up signal is pre-configured by a network-side device or agreed by a protocol.

56. The apparatus according to claim 55, wherein the related parameter of the wake-up signal comprises at least one of time-domain resources of the wake-up signal, frequency-domain resources of the wake-up signal, sequence information of the wake-up signal, and a transmission period of the wake-up signal.

57. The apparatus according to claim 53, wherein the first sending unit is configured to send the wake-up signal to the target cell according to the wake-up signal configuration information on condition that a preset condition is satisfied;
wherein the preset condition comprises at least one of the following:
channel quality of the camped cell of the terminal is lower than and/or equal to a first threshold;
signaling quality of the target cell measured by the terminal is higher than and/or equal to a second threshold;
the target cell satisfies a cell selection or reselection condition of the terminal;
the camped cell of the terminal enables the terminal to send the wake-up signal for the specific cell, the specific cell group, the cell within the specific RAN area, or the cell within the specific area scope;
the terminal has uplink data to transmit or the terminal is ready to access the network;
the terminal needs to update the SIB1 message of a wake-up cell;
the terminal receives a system message update indication related to the wake-up cell.

58. The apparatus according to claim 53, wherein the wake-up signal comprises at least one of an RA scrambling code, an SRS, an SRS positioning reference signal for positioning, and a DMRS.

59. The apparatus according to claim 53, further comprising:
a first receiving unit, configured to receive the SIB1 message sent by the target cell after the first sending unit sends the wake-up signal to the target cell.

60. The apparatus according to claim 53, wherein the SIB1 message satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

61. The apparatus according to claim 53, further comprising:
a third acquisition unit, configured to acquire an SSB sent by the target cell after the first sending unit sends the wake-up signal to the target cell, wherein the SSB is sent by the target cell based on the wake-up signal.

62. The apparatus according to claim 53, further comprising:
a starting unit, configured to start a first timer after the first sending unit sends the wake-up signal to the target cell, wherein the first timer is configured to determine whether the target cell fails to be woken up.

63. The apparatus according to claim 62, further comprising:
a first determination unit, configured to determine that the target cell fails to be woken up if the SIB1 and/or the SSB sent by the target cell are not detected within a running time of the first timer.

64. The apparatus according to claim 62 or 63, further comprising:
a selection unit, configured to select a wake-up cell other than the target cell from a plurality of wake-up cells to perform a wake-up procedure on condition that the target cell is determined to fail to be woken up.

65. The apparatus according to claim 62, further comprising:
a stopping unit, configured to stop the first timer if the SIB1 and/or the SSB sent by the target cell are detected within the running time of the first timer.

66. The apparatus according to claim 62, further comprising:
a processing unit, configured to not determine a wake-up failed cell as a wake-up cell and/or not send the wake-up signal to the wake-up failed cell within a preset time period.

67. A signal transmission apparatus, comprising:
a second sending unit, configured to send wake-up signal configuration information to a terminal, wherein the wake-up signal configuration information is configured to configure at least one of a wake-up signal for a specific cell, a wake-up signal for a specific frequency, a wake-up signal for a cell within a specific RNA, a wake-up signal for a specific cell group, and a wake-up signal for a cell within a specific area scope, and the wake-up signal is used to request a target cell to send an SIB1 message.

68. The apparatus according to claim 67, wherein the second sending unit is configured to acquire the wake-up signal configuration information via at least one of pre-configuration information, a system message of a current camped cell, an RRC message of the current camped cell, a system message of a historically camped cell, and an RRC message of the historically camped cell.

69. The apparatus according to claim 67, further comprising:
a fourth acquisition unit, configured to acquire the wake-up signal configuration information via at least one of an Xn interface, an F1 interface, and a core network interface before the second sending unit sends the wake-up signal configuration information to the terminal;
or,
a configuration unit, configured to configure the wake-up signal configuration information to a neighbor cell via at least one of the Xn interface, the F1 interface, and the core network interface before the second sending unit sends the wake-up signal configuration information to the terminal.

70. The apparatus according to claim 67, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

71. The apparatus according to claim 70, wherein the related parameter of the wake-up signal comprises at least one of time-domain resources of the wake-up signal, frequency-domain resources of the wake-up signal, sequence information of the wake-up signal, and a transmission period of the wake-up signal.

72. The apparatus according to claim 67, wherein the wake-up signal comprises at least one of an RA scrambling code, an SRS, an SRS positioning reference signal for positioning, and a DMRS.

73. A signal transmission apparatus, comprising:
a second acquisition unit, configured to acquire a wake-up signal; and
a third sending unit, configured to send an SIB1 message to a terminal according to the wake-up signal.

74. The apparatus according to claim 73, wherein the wake-up signal or a related parameter of the wake-up signal is configured to indicate at least one of the following:
a transmission period of the SIB1 message;
the number of repetitions of the SIB1 message within one transmission period;
the number of repetitions of the transmission period of the SIB1 message;
transmission or stopping transmission of the SIB1 message.

75. The apparatus according to claim 74, wherein the related parameter of the wake-up signal comprises at least one of time-domain resources of the wake-up signal, frequency-domain resources of the wake-up signal, sequence information of the wake-up signal, and a transmission period of the wake-up signal.

76. The apparatus according to claim 74, wherein the SIB1 message sent to the terminal satisfies at least one of the following:
the transmission period of the SIB1 message is less than or equal to the transmission period indicated by the wake-up signal or the related parameter of the wake-up signal, or a predefined value;
the number of repetitions of the SIB1 message within one transmission period is higher than or equal to the number of repetitions of the SIB1 message within the transmission period indicated by the wake-up signal or the related parameter of the wake-up signal, or a predefined value;
the number of repetitions of the transmission period of the SIB1 message is higher than or equal to the number of repetitions of the transmission period of the SIB1 message indicated by the wake-up signal or the related parameter of the wake-up signal, or a predefined value;
the number of transmissions of the SIB1 message is higher than or equal to the number of transmissions of the SIB1 message indicated by the wake-up signal or the related parameter of the wake-up signal, or a predefined value.

77. The apparatus according to claim 73, further comprising:
a fourth sending unit, configured to send an SSB after the second acquisition unit acquires the wake-up signal.

78. The apparatus according to claim 73, further comprising:
a fifth sending unit, configured to send wake-up signal configuration information via at least one of an Xn interface, an F1 interface, and a core network interface before the second acquisition unit acquires the wake-up signal;
or,
a second receiving unit, configured to receive the wake-up signal configuration information configured by a neighbor cell or a core network via at least one of the Xn interface, the F1 interface, and the core network interface before the second acquisition unit acquires the wake-up signal.

79. A processor-readable storage medium, wherein the processor-readable storage medium stores a computer program, and the computer program is configured to cause a processor to perform steps of the signal transmission method according to any one of claims 1 to 14, or perform steps of the signal transmission method according to any one of claims 15 to 20, or perform steps of the signal transmission method according to any one of claims 21 to 26.
